# EUROPEAN PATENT APPLICATION

(11) **EP 2 738 993 A1**
(43) Date of publication of application: **04.06.2014**
(21) Application number: 12290417.0
(22) Date of filing: 29.11.2012
(51) Int. Cl.: H04L 29/06

(54) **A method for providing communication in a power distribution communication network**

(71) Applicant: Alcatel Lucent, 75007 Paris (FR)
(72) Inventor: Kopp, DIeter, 75428 Illingen (DE)
(74) Representative: Zinsinger, Norbert

(57) **Abstract**

The present invention concerns a method for providing secured communication in a power distribution communication network comprising a plurality of devices (101, 102). The method comprises to create a, in particular write protected, connection topology file (121, 122), to provide a message (130) comprising one or more identifiers (111a, 112a, 120a) related to data (111a ... 1xxx) included in the connection topology file (121) and to send (140) the message (130) comprising the one or more identifiers (111a, 112a, 120a) related to data (111 a ... 1xxx) included in the connection topology file (121, 122) from a source device (101) out of the plurality of devices (101, 102) of the power distribution communication network addressed to a destination device (102) out of the plurality of devices (101, 102) of the power distribution communication network. Further, the present invention concerns devices (101, 102) for the power distribution communication network each comprising a communication unit (1071, 1072) adapted to implement steps of the method for providing secured communication in the power distribution communication network.

## Description

### Field of the invention

The present invention is situated in the field of a power distribution network and relates more specifically to provide communication within the power distribution network.

### Background of the invention

Nowadays communication between the devices of a power distribution network becomes more and more important, in particular in smart grids. A smart grid is an energy network which aims to provide a more flexible structure including renewable energy sources and intelligent energy consumers which vary their energy consumption as far as appropriate depending on the availability of cheaper energy according to the day time and current energy prices. Accordingly, in a smart grid, on the provider side, the energy distributing devices need a complex and reliable communication to adapt their behaviour to the availability of energy from the different energy generators and the variable energy consumption of the energy consumers. The present invention aims to achieve an improvement of the reliability of communication in an energy distribution network and, by this, of the energy provision within the energy distribution network.

Currently, the smart grid communication standards (e.g. IEC 61850, IEC 61968/61870, 62351) are usually XML based. The key problem is the unauthorized modification or insertion of control and command messages in the communication between the devices of the energy distribution network. In so-called man-in-the-middle attacks, this means, if a gateway, data server, communications channel or other non-end equipment is compromised, so that the data which is supposed to flow through this middle equipment is read or modified before it is sent on its way, an authentication to minimize the threat of these man-in-the-middle attacks, is implemented in particular by IPsec and/or TLS. IPsec (IP = Internet Protocol security) is typically used to protect all traffic that is exchanged between two LAN segments. TLS (Transport Layer Security) provides encryption and man-in-the-middle protection on an end-to-end basis. In particular, the standard IEC 62351 defines for protection against unauthorized access to information, unauthorized modification, man-in-the-middle attack etc. the "A-profile security" which relates in particular to the application layer and includes MMS (MMS = Manufacturing Message Specification) as an identifier including a digital signature. However, this on-top application security scheme and the current protection methods do not give a real protection against man-in-the middle attacks.

### Summary of the invention

The object of the present invention is to provide an enhanced security and reliability of the communication between the devices of a power distribution network, wherein the devices which provide the communication could be regarded as to form thereby a power distribution communication network. If, in the following, a device "of" a power distribution (communication) network is referred to, the word "of" may be understood as being "part of" or as being "used for", so that a device "of" a power distribution (communication) network might be read as device "for" a power distribution (communication) network, equivalently, and similarly the other way round, according to the technical context and implementation.

The objective of the invention is achieved by a method for providing secured communication in a power distribution communication network comprising a plurality of devices. The method comprises to create a, in particular write protected, connection topology file, to provide a message comprising one or more identifiers related to data included in the connection topology file and to send the message comprising the one or more identifiers related to data included in the connection topology file from a source device out of the plurality of devices of the power distribution communication network addressed to a destination device out of the plurality of devices of the power distribution communication network. The objective of the present invention is further achieved by a device for a power distribution communication network comprising a communication unit adapted to access a connection topology file, to provide a message comprising one or more identifiers related to data included in the connection topology file and to send the message comprising the one or more identifiers related to data included in the connection topology file addressed to a destination device out of a plurality of devices for the power distribution communication network. The connection topology file, which is accessed by the device, in particular by the communication unit of the device, might be created by said device or by one or more other devices of/for the power distribution communication network. The objective of the present invention is further achieved by a device for a power distribution communication network comprising a communication unit adapted to receive a message comprising one or more identifiers related to data included in a, in particular write protected, connection topology file and, when receiving the message, to check, if the message is an authorized message, in particular, if the one or more identifiers of the message and the data included in the connection topology file are consistent, and to generate a master alarm, when detecting an un-authorized message, in particular when detecting an inconsistency between the one or more identifiers of the message and the data included in the connection topology file.

The method of the present invention comprises in particular to define a network topology and a network connection topology and to create a connection topology file. The definition of the network topology determines in particular which devices belong to the power distribution network and/or to the power distribution communication network depending on the implementation. The connection topology defines in particular the communication relations between the devices of the network. The file, in which the connection topology is stored, is defined as the connection topology file. The use and understanding of these and further features will be described in more detail below.

With other words, formulated in short definitions, the network topology file, connection topology file or topology file is a file comprising the network topology, connection topology or topology, respectively. The network topology or topology in a narrow sense might be defined as determining the devices belonging to the power distribution network, the connection topology defines primarily the devices of the power distribution network between which communication relations or communication for short is implemented, thus determining the devices forming/belonging to/for/of a power distribution communication network. In a wider sense, the network topology, topology or connection topology comprises also the definition of the communication relations determining in particular which devices of the power distribution (communication) network are authorized to send which types of messages and/or at what time to which (further) devices of the power distribution (communication) network. According to the implementation, the network topology file/ connection topology file comprises the topology /connection topology of the power distribution (communication) network, the communication relations and/or a relation table which, however, might be implemented to comprise part of the content of the (connection) topology file as a under-level file or similar partition of the file as register or folder etc. As already stated, the understanding and the definition or terminology of these features will be more detailed below in the respective technical context.

The connection topology file may be stored in a database, in a server included in a database, wherein the storage means might be implemented preferable decentralized or by centralised elements, in particular as a single device, a combination of associated devices, combined, adjacent or distant devices. The method may be implemented by means of a computer program product, in software, hardware or a combination thereof. The software program might be stored in computer readable medium such as tangible media, magnetic recording media, optical recording media, solid state memory, floppy diskettes, CD-ROMs, hard drives, or any other machine-readable storage medium.

The connection topology file may preferably be write protected. The write protection of the connection topology file may consist preferably and in particular in that the file can not be overwritten by an un-authorized person, and in more general terms in that the file can not be accessed, changed or modified or in any way manipulated in an un-authorized way and/or by an un-authorized person, this means without the necessary general or particular permission or authorization. The protection in an even larger sense may consist even in that the file can not be read by un-authorized person and/or without the necessary general or particular permission or authorization. Alternatively or in addition, the write protection may consist in that the file may be accessed and/or the data within may be changed, but the access and/or change are indicated by or in the file or in any other way, in particular by an alarm, by a corresponding message, by highlighting the changed and/or accessed data or by any further notifications or indications. The write protection of the connection topology file may consist in that the file cannot be accessed and/or the data cannot be changed without this access of the file and/or change of data being indicated in any way.

The present invention implements a method for providing secured communication in a communication network within or of a power distribution network. In particular, included into the devices of a power, or energy, distribution network or associated with the devices of the power distribution network, there are devices which are or comprise communication units for providing, sending and receiving messages related to the power distribution network. In a preferred embodiment, each device of the power distribution network comprises a communication unit to enable the communication with other devices of the power distribution network, directly or via the therein included communication devices.

An advantage of the present invention consists in that the reliability of the communication is not or not only provided by protecting the messages themselves, in particular by means of encryption and/or any kind of coding etc., which might be implemented additionally, but above this to secure a reliable communication by creating a connection topology file and to provide a message with one or more identifiers that relate to data which are included in the connection topology file. This means, the message comprises information in the form of identifiers which have a relation to the data or information of the connection topology file. In particular, based on this relation, it can be checked if the relevant identifiers of the message are consistent with the data of the connection topology file. Consistency between the identifiers of the message and the connection topology file can be understood in particular that it can be checked, if the message is an authorized message, because - coarsely spoken - based on the identifiers of the message and on the information in the connection topology file it can be determined that the message is one of those messages which are declared as authorized messages according to the connection topology file as the identifiers of the message correspond to one of the communication connections which are determined to be authorized. With other words, the content of the message in combination with the information included in the write protected connection topology file is needed to determine, if the message is an authorized or - in contrast - manipulated or falsely modified message. Only the person or machine or device etc. that, firstly, has access to the data of the write protected connection topology file and, secondly, that can read the message itself and, thirdly, knows how to interpret the data of the write protected connection topology file can determine, if the message is authorized and therefore is in particular to respect and to follow or if the message is manipulated or in any way false and therefore for example to through away or react in the appropriate way, for example to generate an alarm or master alarm.

Further advantages of embodiments of the present invention are achieved by features of the dependent claims.

In a preferred embodiment, an ID, i.e. identifier or identification, is assigned to each device of the power distribution communication network. Preferably, this ID is unique, this means each device has only one ID and/or each ID refers only to one specific device. Preferably, both conditions are met, this means each device has only one ID and each ID refers only to one specific device. This unique ID and device relation could be termed as one-to-one and onto or biunique. In the following, unless otherwise stated, the term "unique" is to be understood as "biunique". Therefore, the relation of ID and device is one-to-one and onto, as a specific device has only one specific ID, and a specific ID refers only to one specific device.

In a preferred embodiment, the connection topology file is implemented as a write protected connection topology file, the write protection being described in detail above. The connection topology file, with or without write protection, is preferably inserted into a memory of each device of the power distribution communication network. Preferably, the connection topology file is inserted into said memory, when the device is installed as new device of the power distribution communication network. Alternatively or in addition, the memory of the database and/or the database might be protected against un-authorized access in the above or further way.

In a preferred embodiment, the connection topology file is created in particular by creating a relation table for each device of the power distribution communication network, wherein the relation table indicates types of messages and the relation, which devices are authorized to send which types of messages and/or at what time to which devices as authorized source devices and/or authorized destination devices, respectively, of the plurality of devices of the power distribution communication network. The relation table for short may be understood as to determine in particular, who is authorized to send what to whom and when. In particular, the relation table indicates, if a specific device is authorized to send a specific message at a specific moment to a specific further device. The relation table may be established or set once and for ever or may be flexible as a matter of time. This timely flexibility may be of one or both of the two following kinds, namely the data included in the relation table may have a time parameter or the relation table itself, it is the application of a particular relation table, depends on time.

In more detail, in a preferred embodiment, the relation table, this means more precisely, the content of the relation table, may be time dependent, in particular may be variable from day to day. This means, that the content of the relation table comprises a time component or time parameter and indicates thereby that the authorization of a specific device to send a specific message to a specific further device may depend on the time. The relation table includes the time dependent data and indicates which data applies at what time. For example, a specific device may be authorized to send a specific message to a specific further device during day time, e.g. from 8 o'clock a.m. to 8 o'clock p.m., but the same device may not be authorized to send the same kind of message to the same further device during night time, e.g. from 8 o'clock p.m. to 8. o'clock a.m. However, in this preferred embodiment, the relation table includes all information and authorized communication relations for each moment of time. The relation table itself does not need to be changed, rather the application of the data of the relation table, i.e. the relevant communication relation which indicates an authorized communication and therefore message depends on the time.

In a preferred embodiment, the relation table may vary by time, in particular each day. In a preferred embodiment, a first relation table which is valid for example on Monday may be replaced by another relation table on Tuesday. In a preferred embodiment, a relation table may not include parameters which depend on time, as the validity of the specific relation table indicates already if a specific authorized communication relation applies or not, namely only if said authorized communication relation is included within the one relation table which is valid at that time. In a preferred embodiment, a relation table may be valid during the day time and another relation table may be valid during the night time, the beginning and ending of the day and night corresponding to the above example or otherwise determined. With other words, the valid relation table replaces the invalid relation table, the validity or applicability of the relation table is determined by the time. In a preferred embodiment, a relation table may become invalid and may thus be replaced by another relation completely.

In a preferred embodiment, the dependency on the time may be of both kinds, namely a specific relation table may be valid e.g. only during day time and may furthermore include amongst other parameters or data one or more time parameters which indicate for example, if a specific device is authorized to send a specific type of message to a further specific device at a specific time moment, for example between 8 o'clock a.m. to 12 o'clock a.m. It could be stated generally that, if a particular communication relation is not indicated (in the valid relation table) amongst the authorized communication relations or messages, the message will be determined to be un-authorized. For example, said specific device may be authorized to send the specific message to the specific device only between 4 o'clock p.m. and 6 o'clock p.m. so that such a message sent at 10 o'clock a.m. is un-authorized and must be caused by manipulation of the communication, in particular inserted by man-in-the-middle attack.

Preferably, in order to create a connection topology file, a network topology is defined. The definition of the network topology may be regarded as a fundamental implementation step, because the further steps are based on the definition of the network topology. The network topology determines in particular which devices are comprised by or in the network. By the network topology the devices which belong to the power distribution network and/or - depending on the implementation - to the power distribution communication network can be determined. This means the communication devices might be integrated in the same devices which are the energy network devices responsible of the energy distribution. Alternatively or in addition, the communication devices may be implemented in separate devices, preferably, adjacent to the energy devices. The definition of the network topology therefore determines in particular which are the devices of the network and preferably assigns a biunique ID to each device of the power distribution (communication) network. Furthermore, the definition of the network topology may be combined with the definition of one or more, generality a plurality of communication relations and this implicates in particular the authorized source devices and destination devices in relation to corresponding authorized message types preferably depending on time for the network. Generally spoken, the term "network topology" could be understood in a narrow sense relating rather to the devices of the network, but could be understood in a wider sense including the communication relations and further or all data of the connection topology file which apply or relate to determine, if a message is authorized.

In a preferred embodiment, the definition of the network topology, the one or more communication relations, the authorized source device and destination devices and the corresponding authorized message types and sending time conditions are stored in a memory of each power distribution communication network device, wherein the memory of the device may be in particular write protected, this means in particular protected against un-authorized access or any kind of un-authorized manipulation.

In a preferred embodiment, the network topology may be defined as being fixed for ever, this means until the network topology as a whole may be determined to be invalid and totally replaced. However the fixed network topology already includes exclusively all communication devices and relations etc. which are not supposed to be changed or supplemented by further corresponding elements. This means, if ever the network topology does not fit any more due to necessary changes the network topology file or topology connection file will have to be replaced by a new network topology connection file, because in this embodiment the network topology connection filed did not consider later modification to the network topology besides eventually the time dependent parameters concerning the authorization of already existing network devices as described above, but the incorporation of new devices into the network topology has not been taken into consideration by this particular network topology and the corresponding network topology connection file.

In a preferred embodiment, the definition of the network topology may already include a definition of a roadmap for enlarging the power distribution network and/or the power distribution communication network respectively. In particular, the network topology may define and determine the deployment of new devices of and within the power distribution communication network. This means, in combination with or included into the definition of the primary network topology, it may be defined, which devices may be installed at what later moment within the power distribution communication network and in particular, what are the communication relations between these one or more later installed devices and the further already existing devices, in particular in regard of the authorization of sending messages between. Maybe the communication relations of the older devices may be changed also because of the installation of the new devices. This definition of the installation of new devices enlarging the power distribution communication network or eventually replacing devices of the power distribution communication network may be termed as the definition of a roadmap for deployment of new devices of the power distribution communication network. As the deployment of new devices of the power distribution communication network may include a new definition of the network connection topology including and/or in combination of the communication relations, this embodiment may be regarded as a particular embodiment of a timely variable network topology file. Namely, based on the deployment of the new installed devices and the communication relations, the network topology file may be changed based on the underlying roadmap of the definition of the network topology. In summary, the new devices into the power distribution communication network according to the deployment roadmap may lead to a new network topology and connection file.

In this context, it has to be noted that the termination and implementation of the network topology and communication relations may be varied in a manifold of realisations followed by a differing usage of terms, such as network topology, communication network topology, connection topology or any kind or combination of these or similar wording. In particular, instead of connection topology the wording communication topology may be used. However the basic idea would still be that a topology is defined for a network in combination or including the communication relations between the devices or components of the network, in particular indicating thereby which of these are authorized. This definition of a communication / connection (network) topology may include or be in combination with a definition of a roadmap or any kind of change of devices or deployment of new devices which will be combined with the definition of respective communication relations. Furthermore, such a roadmap may also indicate the time of the installation of new devices and in particular embodiments the de-activation or de-installation of existing devices out of the network topology and adapting of the corresponding connection topology.

The definition and/or redefinition of the network topology in combination with the communication relations are preferably pre-determined so that no deliberate change could be made, in particular to prevent that an un-authorized person could add a new device and include this device into and with new defined communication relations or provide false modifications of any kind. The network topology may be seen as defining a closed number of communication participants fixed once for ever or with pre-determined modifications.

Therefore, in a preferred embodiment, devices are included into the power distribution communication network based on and only according to the deployment roadmap which already indicates which devices are newly installed at what time and which are the corresponding new communication relations.

Preferably, the time/day dependent topology and/or the roadmap defining determined topology modifications may - because of its complexity - provide additional protection against any attack, because the attacker might not know the topology information valid at the moment of attack so that he might be detected more easily, as he wants to change a topology information which does not correspond to the actual valid data. Furthermore, the scalable network topology provides flexibility of a robust intelligent power grid and based on its decentralized character and scalability avoids huge a priori investments in large control centers.

In a preferred embodiment, the communication network topology is stored as a file, preferably, in a memory of each device of the communication network and, in particular, the file is stored in a write protected manner to prevent any kind of un-authorized access or un-authorized manipulation, in particular to prevent the changing of the communication (/connection) network topology and/or communication relation included preferable in the relation table.

In a preferred embodiment, the protection of the file in the memory of a device could include protection by digital signature, in particular of the ID of the device stored in the memory, and/or encryption of the ID and/or the whole content of the memory file including the data in regard of the network topology, the communication relations etc.

Preferably, a message sent from a device of the power network communication network to another device of the power network communication network will be checked to be authorized by determining the consistency of the identifiers included in the message and data included in the network topology file. In this context, it should be noted that a message could be regarded as any kind of data packet or data stream segment or note or notification of any technical implementation.

In a preferred embodiment, the one or more identifiers included in a message comprise a message source ID, a message destination ID and a message type ID, which are assigned to the message. The source ID of the message indicates in particular the source device of the message, i.e. the device which sent the message. This may be the device of the power distribution network, if the power distribution network device sends the message itself. The source device may be a separate device or a communication unit associated with or included into the device of the power distribution communication network or the power distribution network device. In either case, the source ID biuniquely indicates and identifies the device which is the source of the message. The same applies correspondingly to the destination ID. In particular, the message is sent as unicast or multicast message and therefore indicates uniquely the destination device.

Preferably, a message may be sent by any kind of communication line, wired or wireless. In particular, a message may be sent by means of wireless communication, in particular mobile communication including GPRS (= General Packet Radio Service), Wimax (= Worldwide Interoperability for Microwave Access), CDMA (Code Division Multiple Access) or LTE (Long Term Evolution), preferably PMR (= Professional Mobile Radio), or by means of wireline communication, in particular Powerline, preferably MV (= Medium Voltage) powerline. Furthermore, communication could be implemented by means of DSL (= Digital Subscriber Line) or via optical fiber.

The types of the message is preferably one of switch order type and the message correspondingly a switch order message, measurement type and the message correspondingly a measurement message, status type and correspondingly status message, control type and correspondingly control message, process/application type and correspondingly process/application message. A message including an order or an instruction could be termed as command likewise, such as switch command for example. A measurement message may include the order to implement a measurement, e.g. of an energy consumption or of any amount relevant within an energy network. A measurement message may also comprise the measurement results of a foregoing measurement. A status message may indicate the devices as active or out-of-order etc. A control message may be used to check the in-order or out-of-order status of a device. A process/application message may incite or implement a process or an application, for example the including of an energy source into the energy network, if an energy source is available and needed in the case of an augmented energy demand. This energy source may be in particular a renewable energy source which is not always available as the energy provided depends on weather conditions. A switch order message may include a command to switch on or off any kind of device of the energy distribution communication network. Each measure type may have a defined sensibility, e.g. low for a measurement message and very high for a switch order message, because a wrong switch command could generate a disaster, for example lead to a power off state or even overloaded devices up to burning devices.

In a preferred embodiment, the message and/or in particular the one or more identifiers, which are related to data included in the write protected connection topology file, of the message are protected with a digital signature and/or with encryption. In more specific embodiments, the extension of a message by the identifiers might replace or enhance the MMS (= Manufacturing Message Specification) part or might be part of the XML (= Extensible Markup Language) message body.

In a preferred embodiment, the source and/or destination device is one of: a primary substation, a secondary substation, a measurement point, a point comprising a local collection of information and/or local control and processing decision functions. A primary substation or primary distribution substation is usually to be understood as the substation between the HV (= high voltage) network and the MV (= medium voltage) network part of the energy distribution network. Thus, the primary substation may transform the voltage from e.g. 110 kV to 20 kV and may provide voltage at 20/0.4 kV depending on the kind of the current provided (three phases or two phases). The secondary substation or secondary distribution substation is usually to be understood as the substation between the MV network part and the LV (= low voltage) network part of the energy distribution network. Thus, the secondary substation may transform the voltage from e.g. 20/0.4 kV to 400/230 V.

In a more general view of the power or energy distribution network, the power /energy distribution network is defined as an open ring. The open ring structure may be more or less consistent in regard to be a ring, because the both sides of the network has a connection to a power source, and to be an open ring, because the power switches and breakers could and will repeat the power flow between the segments of the energy network to provide a stable power flow from one segment to another segment of the energy network, even in case one part of the energy network is taken out of the network, as the power flow will be guided on another way through the power network. In this context, it has to be noted that the term network may be understood in a wider sense as a determined area in which a energy distribution communication network is implemented, the dimension may vary from a small area, for example corresponding to a mobile radio cell, to a greater area, for example covering a region of a country or more, in which wired or wireless communication is implemented by means of a network structure.

While any kind of technical implementation might be provided, a primary substation may typically cover up to four open rings, each ring connecting up to 50 secondary substations. A primary substation and/or each of the primary substations may be connected to a central control system by fiber connections or any other kind of communication channel. The central control system may be implemented e.g. as a SCADA (= Supervisory Control And Data Acquisition). The central control system may give commands to the primary substation. This implementation applies in particular that decisions which concern the energy network as a whole are transmitted to the primary substation, for example devices concerning the total energy transport level, the total energy demand and supply in the energy network etc. The primary substation may be or be associated with a LTE (PMR) base station or powerline head-ends for communication in particular with the secondary substations or further devices of the power distribution communication network which provide the corresponding communication units or devices. In particular, the access to the energy distribution communication network may be implemented in the way, that the access to the energy network communication devices is only provided via the one or more primary substations and not directly to further devices, in particular to the secondary substations. In particular, the energy distribution communication network may be accessed to and via the primary substations from a central control system, e.g. SCADA, or another authorized device which might be inside or outside or on the edge of the energy distribution communication network. The authorized device has preferably an ID to indicate and determine that the device is an authorized device, e.g. SCADA ID. Like in regard to the further authorized devices of the power distribution communication network the assignment of an ID to the central control system aims to protect that no intrusion or man-in-the-middle element could act (falsely) as central control system or primary substation or secondary substation or distributed intelligence or measurement device or point etc. Depending on the implementation, the central control system might be one of the devices of the power distribution communication network and implement the herein described method of secured communication or may implement further protection for communication with the primary substation 101.

A measurement device or measurement point is in particular a device which implements measurements within the power distribution communication network. It may measure values related to the energy demand and supply, the energy consumption and further measures in relation to the consumers or providers of the energy distribution communication network etc. The measurement point may provide measurements related to the communication within the power distribution communication network to determine the quality of the communication between the devices and/or which devices communicate with each other.

A point comprising a local collection of information and/or local control and processing decision functions may also be termed as a distributed intelligence. A distributed intelligence may collect and store local information, may implement local control and/or processing functions and/or take decisions on local control and/or processing. Based on local information (e.g. renewal overproduction, cable overload, overvoltage, degradation on power quality, etc.) a distributed intelligence may take local decisions to keep the power network stable, for example to activate or de-activate local energy providers or switch on or off local energy distribution devices. While the central control system may rather make decisions and take corresponding processing steps concerning the overall energy network, a distributed intelligence may make decisions and take corresponding processing steps concerning a locally restricted area of the energy network. However, the energy network may show a plurality of implementations of the control and decision elements within the network.

### Brief description of the drawings:

The advantages of preferred embodiments will be more completely understood when reading the following detailed description in which
- Fig. 1: depicts a part of a power distribution communication network
- Fig. 2: depicts a more detailed part of a power distribution communication network and steps of a method for providing secured communication in the power distribution communication network

### Description of embodiments

The following detailed description of preferred embodiments is meant for illustrative reasons and not to limit the scope of the present invention which is defined only by the claims.

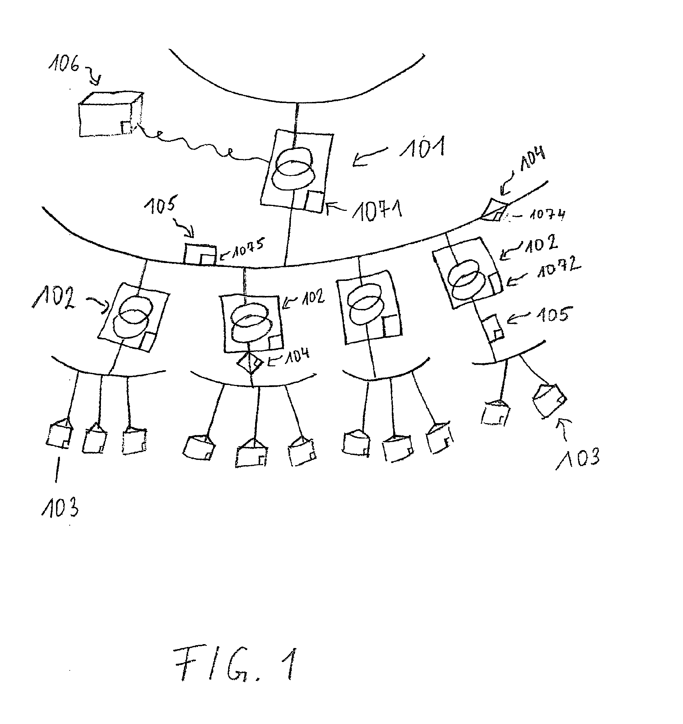

Fig. 1 depicts a power distribution communication network 100 and devices 101, 102, 103, 104, 105, 106. The device 101 may be a primary substation connected with a central control system, e.g. a SCADA, 106. The central control system 106 might be regarded as being part or as not being part of the power distribution communication network and/or to belong to the devices of the power distribution communication network 100 or not according to the implementation. The central control system might be connected to the depicted primary substation 101 via fiber connection or any communication channel. For illustrative reasons, only one device 101 is depicted. However, the power distribution communication network 100 may comprise more than one primary substations 101. Devices 102 may be secondary substations. Alternatively or in addition in the present implementation and/or in further embodiments, devices 102 may comprise energy generating providers of conventional, for example coal, and/or renewable energy sources, in particular wind-farms, solar plants, biomass, water-power, energy storage means, pump storages etc. In the following, devices 102 are referred to in particular as being secondary substations. Devices 104 may be measurement points and devices 105 may be points comprising a local collection of information and/or local control and processing decision functions. The devices 105 may be termed for short distributed intelligence or distributed intelligence points 105. Similarly as in regard of the primary substations 101, the power distribution network 100 might and usually will comprise a plurality of secondary substations 102, measurement points 104 and distributed intelligence points 105. Furthermore, fig. 1 depicts a plurality of devices 103 which might be energy consumers. The energy consumers 103 might be regarded as within or on the edge or outside of the power distribution (communication) network 100 and/or therefore to belong to the devices of the energy distribution communication network 100 or not. Accordingly, depending on the implementation, the energy consumers 103 might take part of the implementation of the secured communication within the power energy distribution network or not. Finally, it has to be noted that amongst the devices 103, further devices might appear which might also provide energy, in particular as renewable energy sources which might be implemented preferably in or in adjacency of the energy consumers, for example solar cells on the roofs of the houses etc. Further energy sources or any further devices might be part of the power distribution network and/or of the power distribution communication network 100 according to the implementation.

The understanding of the implementation might be facilitated by contemplating the steps of providing secured communication for a preferred embodiment for an overview in chronological order. As a first implementation step, a network topology of the power distribution communication network is provided, which consists primarily in defining the number and the kind of devices 101 etc. being part of the power distribution communication network and assigning a unique, in the sense of biunique ID, to each device. As a second implementation step, a connection topology file is provided which comprises in particular the network topology and a relation table including - generally spoken - the communication relations within the power distribution communication network 100 which are valid for a message to be authorized and therefore to be respected as valid. As a third implementation step, a message including identifiers in particular the ID of the source device, the ID of the destination device and the ID of the type of the message is wrote by the source device, sent to the destination device and received and read by the destination device. The destination device, finally, checks based on the identifiers included in the message, in particular the ID of the source device, the ID of the destination device and the ID of the message type, if the message is authorized. This check is made by the destination device by a look-up into the connection topology file stored in the memory of the destination device to determine based on the knowledge of the source device ID, destination device ID and message type ID, if the specific source device has the right or authorization to send this type of message to the destination device which would be - at least in the regular case, if the message is authorized - the device itself receiving the message. As the connection topology file comprises in particular the relation table which includes comprehensively and exclusively all authorized communication relations, this means which devices are authorized to send which kind of message at what time to which kind of devices and as based on the IDs included in the message, the destination device knows the source, message type and authorized destination, the device receiving the message can determine, if it is correct that the source device sent this type of message at the time the message was sent to itself as the right authorized destination device and if the message is therefore authorized, correct and valid and has to be respected, for example the command included therein executed.

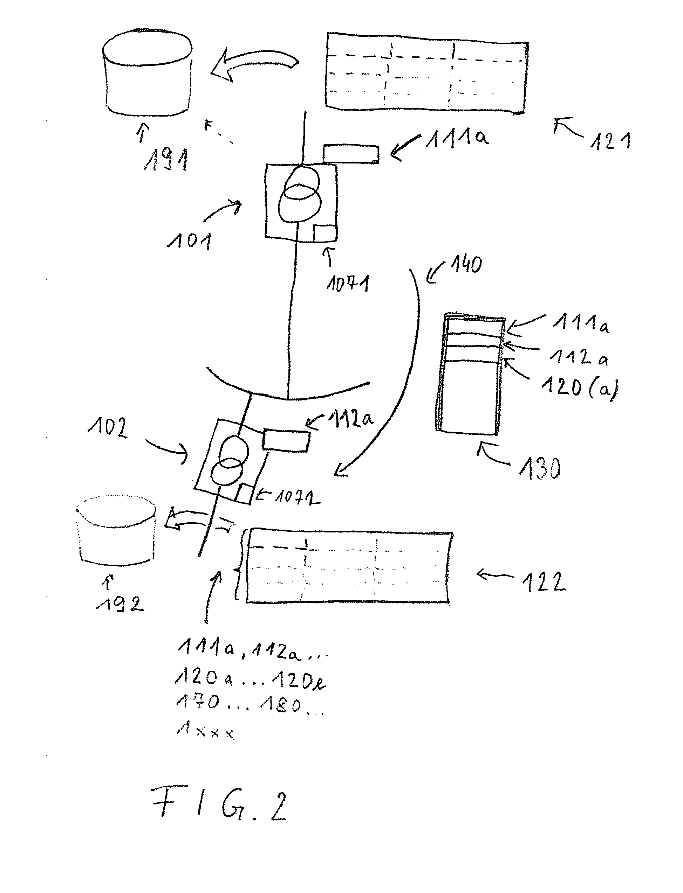

Following this overview, the steps of a preferred exemplary embodiment will be described in more detail now: The source device in this embodiment is a primary substation 101 of the power distribution communication network 100 and the destination device in this embodiment is a secondary substation 102 of the power distribution communication network 100. The primary substation 101 and the secondary substation 102 are depicted in figs. 1 and 2. The two rings symbolizing each of the substations might represent the transformer coils which transform the voltage from a higher level to a lower level. While fig. 1 depicts an overview of the power distribution communication network, fig. 2 shows a more detailed part of the power distribution communication network 100 and depicts also steps of the method to provide secured communication therein and further detailed elements of the power distribution communication network 100 and/or of the method, e.g. steps of the method to provide secured communication within the power distribution communication network 100.

The primary substation 101 has a unique ID 111a, which might be assigned to the device e.g. the housing of the primary substation 101 and/or preferably and in particular stored in the connection topology file 121 of the primary substation 101 which is preferably stored in the memory 191 of the primary substation 101. The same implementation applies for the further devices of the energy distribution communication network 100, in this example in particular for the secondary substation 102 with the ID 112a, the connection topology file 122 and the memory 192 of the secondary substation 102.

The primary substation 101 will send a message 130 to the secondary substation 102, the sending step is symbolized by the arrow 140. The message 130 will be checked by the secondary substation 102, if the message is authorized, in particular if the sending device is an authorized source at all, this means if there is/exists actually a sending device as it appears in the message, if the sending device is an authorized source device to send messages at all, in particular if the sending device is authorized to sent this type of message, if this kind of message is valid at all, if the secondary substation 102 itself is a authorized destination device at all and in particular for this type of message sent, if the primary substation 101 is authorized to sent this type of message to the actual destination device, namely to the secondary substation 102, and in particular at the time, in particular time of the day and/or date the primary substation 101 actually sent the message 130 to the secondary substation 102.

All this checking will be performed by the secondary substation 102 based on the identifiers 111 a, 112a and 120 included in the message 130 with reference to and by comparing the identifiers with the information stored in the memory 192 of the secondary substation 102, namely with the data in the connection topology file stored therein. By the data in the connection topology file 122, the secondary substation 102 will determine, if the above described sending of said type of message 130 from the primary substation 101 to the secondary substation 102 at this moment of time was correct, in order, authorized, valid and has to respect, e.g. executed etc.

In more detail, the connection topology file 122 stored in the memory 192 of the secondary substation 102, for short the connection topology file 122 of the secondary substation 102, includes the topology of the power distribution network, in particular of the power distribution communication network 100. The topology of the power distribution communication network 100 includes all devices of the power distribution network 100 and in case the communication devices are implemented as separate devices assigned to the power distribution devices the communication devices and their association to the power distribution devices.

The devices are identified with a biunique ID, which is inserted in the sent message 130 in the respective ID field. As it can be seen in fig. 2, the message 130 comprises - in the field of the destination device ID - the ID 111a. The secondary substation 102 will read the ID 111a and will look in its connection topology file 122 and determine the primary substation 101 as the sending device as the ID 111a unambiguously, uniquely, is assigned to and only to the primary substation 101 (which furthermore preferably has only this single ID as device ID of the communication network and could not appear for example in another message with another alias ID).

The secondary substation 102 will then check that the message 130 has been correctly sent to the indicated destination device. For this check the secondary substation 102 will read the destination device ID field of the message 130 and will read the ID 112a. The secondary substation 102 knows, at least by its connection topology file and/or by looking at its ID field 112a associated with the secondary substation 102 and in particular stored in the connection topology file memory 192 or in another memory of the secondary substation 102, that the ID 112a is the ID of the secondary substation 102, itself, because to and only to the secondary substation 102 the ID 112a is assigned.

The secondary substation 102 will then look at the message type field in the message 130 and will read the ID 120, more precisely the ID 120a for a particular type of message, for example a switch order type. Beside the switch order type 120a the definition of message types stored in the connection topology file and used within the secured communication might be measurement type 120b, status type 120c, control type 120d and process/application type 120e. Further message types might be determined and implemented equivalently. In this exemplary embodiment, the secondary substation 102 will know by look-up into the connection topology file 122 that the ID 120a stands actually for a switch order message type. Therefore, as the message ID is unique, the message 130 received must be a switch order message.

Consecutively, the secondary substation 102 will check the time of the sending of the message 130 by looking into its time chronograph or of any time indicating means to which the secondary substation 102 has access. Finally, the secondary substation 102 will look into its connection topology file 122, if the primary substation 101 is an authorized source device to send this type 120a of message 130 at the moment it did to the secondary substation 102 as authorized destination device for this type 120a of message 130.

The connection topology file comprises besides or among (depending on the used terminology and definitions) the network topology in the narrower sense all kind of authorized communication relations, which indicate which devices as source devices are authorized to send which types of messages at what moment of time to which devices as destination devices and accordingly which messages are authorized messages. The data stored in a connection topology file are symbolized by the references signs 111 a ..., 120a .... 170 ...,180.... and 1xxx, wherein the references signs 170 ... might refer to authorized communication relations and 180 ... might refer to time parameters. 1xxx stands for further data stored in the connection topology file. The structure and/or references of the data included in the connection topology file and of the file itself might vary. In fig. 2, the references signs depicted in detail for connection topology file 122 apply to the connection topology file 121 equivalently and to any connection topology file of a device of the energy distribution communication network. The connection topology file might have exactly the same content for every device having such a file or the connection topology file might have a content adapted to the device, for example a particular network topology file might not include data which are not relevant for a device indicating e.g. communication relations which are not of interest to said device. While advantageously, each device of the communication topology network has a connection topology file implemented in or adjacent to the device, alternatively the connection topology file might be implemented in one or more centralized elements to which the authorized devices have access.

In this context, it has to be mentioned that a manifold of un-authorized messages could be imagined. For example, the primary substation 101 could be authorized to send a particular message type 120, but not to the second substation 102. As another example, the secondary substation 102 is authorized to receive a particular type 120 of message 130 only from one or more particular devices as source devices according to the connection topology file, but not from the primary substation 101 as source device. As a further example, the secondary substation 102 will determine that the primary substation 101 is authorized to sent the message type 120 only during the night time from 8 o'clock in the evening to 8 o'clock in the morning, for example a measurement message with message type 120b for example. In this case, the secondary substation 102 will know that a message 130 with message type 120b sent during day time for example at 10 o'clock a.m. can not be an authorized message if the ID of the source device refers to the primary substation 101. Therefore, the secondary substation 102 will know that a message 130 with message type 120b with the ID 111a referring to primary substation 101 sent at 10 o'clock a.m. can not actually be sent from the primary substation 101 in order. This means said message 130 is ought to be sent based on manipulation. For example, in a man-in-the-middle attack as mentioned above, a fraudulent intruder might have inserted the message 130 into the communication flow to secondary substation 102. The intruder may have indicated falsely the primary substation 101 as the source device of the message, this means the indication of the primary substation 101 is a fake and an attempt to cause the secondary substation 102 to implement a processing which is not authorized. In the case of the measurement message type 120b, the secondary substation 102 might only waste processing resources when prosecuting the un-authorized message with message type 120b as a measurement message. However, if the message 130 was actually a switch order type 120a message 130 instructing the secondary substation to switch off a particular device or the shut down itself, the negative consequences might be important. For example, because of the shut down of the secondary substation 102 caused by an authorized switch order type 120a message, further, in particular, adjacent secondary substations 102 of the power distribution network might be overloaded, which could lead to burning devices if the voltage exceeds to a dangerous level. In a less dangerous situation which is still completely unpleasant and has to be avoided likewise, due to the shut down of the secondary substation 102 energy consumers might be without energy supply and will have to suffer a black-out of energy consuming devices which for example for hospitals despite their emergency batteries still is a bad situation.

However, in the exemplary embodiment, the secondary substation 102 will determine that the message 130 with message type 120a appearing to be sent by primary substation 101 is an un-authorized message and will not prosecute the switch order. In the opposite, the secondary substation 102 will cause an alarm sent to particular devices or to a plurality of devices and/or to a central control system as the SCADA mentioned above. The alarm might be a master alarm depending on the used terminology or on the implementation of the alarm.

To implement the method of providing secured communication, each device 101, 102, 104, 105 of (or "for" as described above) the power distribution communication network 100 preferably comprises a communication unit 1071, 1072, 1074, 1075 in particular for sending and receiving a message, respectively, and for further processing as will be described in more detail below. The communication units 1071, 1072, 1074, 1075 might be integrated into the respective device 101, 102, 104, 105 (fig.1) or adjacent to the device 101, 102, 104, 105. The communication between the devices 101, 102, 104, 105 of the power distribution communication network 100 might be provided, in particular by means of their respective communication units 1071, 1072, 1074, 1075, by means of wireless communication, in particular mobile communication including GPRS, Wimax, CDMA or LTE, preferably PMR, or by means of wireline communication, in particular Powerline, preferably MV powerline.

The communication units 1071, 1072, 1074, 1075 may be implemented as a single unit, a stand-alone device, or within a database, integrated in a computer and/or within a computer network. The communication units 1071, 1072, 1074, 1075 may be implemented through the use of hardware, software and/or hardware capable of executing software in association with appropriate software.

More specifically, the communication units 1071, 1072, 1074, 1075 can be comprised or implemented by circuit-based processes, including possible implementation as a single integrated circuit, such as an ASIC (= Application Specific Integrated Circuit) or such as an FPGA (= Field Programmable Gate Array), a multi-chip module, a single card, or a multi-card circuit pack. The functions of the communication units 1071, 1072, 1074, 1075 may be implemented as processing blocks in a software program. Such software may be employed in a digital signal processor, micro-controller, or general-purpose computer implemented as a single device or integrated in a computer network.

The communication units 1071, 1072, 1074, 1075 may comprise program code embodied in tangible media, such as magnetic recording media, optical recording media, solid state memory, floppy diskettes, CD-ROMs, hard drives, or any other machine-readable storage medium, wherein, when the program code is loaded into and executed in the communication units 1071, 1072, 1074, 1075, the communication units 1071, 1072, 1074, 1075 become apparatuses used for practicing the invention.

In an exemplary embodiment, the primary substation 101 comprises the respective communication unit 1071 and secondary substation 102 comprises the respective communication unit 1072 (fig. 2). The primary substation 101, preferably by means of its communication unit 1071, will access the write protected connection topology file 121 stored in the memory 191 of primary substation 101 and will provide the message 130 comprising the identifiers 111 a, 112a, 120a. The primary substation 101, in particular by the communication unit 1071, sends 140 the message 130 addressed to the secondary substation 102, which, in particular by the communication unit 1072 of secondary substation 102, will receive the message 130, unless the message is not correctly transmitted. Secondary substation 102, in particular by means of the communication unit 1072, will check, if the message 130 is an authorized message, in particular, if the IDs 111a, 112a, 120a of the message 130 and the data 111a ... 1 xxx included in the write protected connection topology file 122 of the secondary substation 102 are consistent, and will generate a master alarm, when detecting an un-authorized message, in particular when detecting an inconsistency between the one or more identifiers 111a, 112a, 120a of the message 130 and the data 111a ... 1xxx included in the write protected connection topology file 122.

## Claims

1. A method for providing secured communication in a power distribution communication network (100) comprising a plurality of devices (101, 102, 104, 105), the method comprising:
- creating a, in particular write protected, connection topology file (121, 122);
- providing a message (130) comprising one or more identifiers (111 a, 112a, 120a) related to data (111a ... 1xxx) included in the connection topology file (121); and
- sending (140) the message (130) comprising the one or more identifiers (111 a, 112a, 120a) related to data (111a... 1xxx) included in the connection topology file (121, 122) from a source device (101) out of the plurality of devices (101, 102, 104, 105) of the power distribution communication network (100) addressed to a destination device (102) out of the plurality of devices (101, 102, 104, 105) of the power distribution communication network (100).

2. The method according to claim 1, further comprising:
- assigning a unique ID (111a, 112a, 114a, 115a) to at least one device (101, 102, 104, 105) of the power distribution communication network (100), in particular to each device (101, 102, 104, 105) of the power distribution communication network (100).

3. The method according to claim 1, further comprising:
- inserting the connection topology file (121, 122) into a memory of at least one device (101, 102, 104, 105) of the power distribution communication network (100), when installing the device (101, 102, 104, 105) as new device of the power distribution communication network (100).

4. The method according to claim 1, wherein the step of creating a connection topology file (121, 122) further comprises:
- creating a relation table for at least one device (101, 102, 104, 105) of the power distribution communication network (100), wherein the relation table indicates types (120a, 120b, 120c, 120d, 120e) of messages (130) and the relation, which devices (101, 102, 104, 105) are authorized to send which types (120a, 120b, 120c, 120d, 120e) of messages (130) and/or at what time to which devices (101, 102, 104, 105) as authorized source devices and/or authorized destination devices of the plurality of devices (101, 102, 104, 105) of the power distribution communication network (100).

5. The method according to claim 4, wherein the step of creating a relation table further comprises:
- creating the relation table as time dependent, in particular variable from day to day; and/or
- varying the relation table by time, in particular each day.

6. The method according to claim 1, wherein the step of creating a connection topology file (121, 122) further comprises:
- defining a network topology, one or more communication relations (170), authorized source devices and/or authorized destination devices in regard of message types (120a, 120b, 120c, 120d, 120e) of the power distribution communication network (100); and
- storing the definition of the network topology, the one or more communication relations (170), the authorized source devices and/or the authorized destination devices in regard of message types (120a, 120b, 120c, 120d, 120e) in a, in particular write protected, memory (191, 192) of each power distribution communication network device (101, 102, 104, 105).

7. The method according to claim 6, wherein the step of defining a network topology further comprises:
- defining a roadmap for deployment of new devices (101, 102, 104, 105) of the power distribution communication network (100).

8. The method according to claim 1, wherein the step of the providing a message (130) comprising one or more identifiers (111a, 112a, 120) comprises:
- assigning a message source ID (111a), a message destination ID (112a) and a message type ID (120a, 120b, 120c, 120d, 120e) to the message (130).

9. The method according to claim 1, wherein the step of providing a message (130) comprising one or more identifiers (111a, 112a, 120a) related to data (111a ... 1xxx) included in the connection topology file (121, 122) comprises:
- protecting the message (130) with a digital signature and/or with encryption.

10. The method according to claim 1, wherein the method further comprises:
- checking, if the message (130) is an authorized message, and generating a master alarm, when detecting an un-authorized message, in particular when detecting an inconsistency between the one or more identifiers (111a, 112a, 120a) of the message (130) and the data (111a ... 1xxx) included in the connection topology file (121, 122).

11. The method according to claim 1, wherein the source and/or destination device is one of: a primary substation (101), a secondary substation (102), a measurement point (104), a point (105) comprising a local collection of information and/or local control and processing decision functions.

12. The method according to claim 1, wherein the message (130) is sent (140) by means of wireless communication, in particular mobile communication including GPRS, Wimax, CDMA or LTE, preferably PMR, or by means of wireline communication, in particular Powerline, preferably MV powerline.

13. The method according to claim 1, wherein the type (120a, 120b, 120c, 120d, 120e) of a message (130) is one of: switch order type (120a), measurement type (120b), status type (120c), control type (120d) and process/application type (120e).

14. A device (101, 102, 104, 105) for a power distribution communication network (100) comprising a communication unit (1071, 1072, 1074, 1075) adapted to access a, in particular write protected, connection topology file (121, 122), provide a message (130) comprising one or more identifiers (111 a, 112a, 120a) related to data (111 a ... 1xxx) included in the connection topology file (121, 122) and send (140) the message (130) comprising the one or more identifiers (111a, 112a, 120a) related to data (111a ... 1xxx) included in the connection topology file (121, 122) addressed to a destination device (101, 102, 104, 105) out of a plurality of devices (101, 102, 104, 105) for the power distribution communication network (100).

15. A device (101, 102, 104, 105) for a power distribution communication network (100) comprising a communication unit (1071, 1072, 1074, 1075) adapted to receive a message (130) comprising one or more identifiers (111a, 112a, 120a) related to data (111 a ... 1 xxx) included in a, in particular write protected, connection topology file (121, 122) and, when receiving the message (130), to check, if the message (130j is an authorized message, in particular, if the one or more identifiers (111a, 112a, 120a) of the message (130) and the data (111 a ... 1 xxx) included in the connection topology file (121, 122) are consistent, and to generate a master alarm, when detecting an un-authorized message, in particular when detecting an inconsistency between the one or more identifiers (111a, 112a, 120a) of the message (130) and the data (111a ... 1xxx) included in the connection topology file (121, 122).
